# EUROPÄISCHE PATENTSCHRIFT

(11) **EP 1 728 102 B1**
(45) Veröffentlichungstag und Bekanntmachung des Hinweises auf die Patenterteilung: **14.08.2019**
(21) Anmeldenummer: 05716607.6
(22) Anmeldetag: 01.02.2005
(51) Int. Cl.: G01V 3/15

(54) **ORTUNGSGERÄT MIT AUSGABEEINHEIT ZUR WIEDERGABE EINER AUSGABEGRÖSSE**
LOCATING DEVICE WITH AN OUTPUT UNIT FOR REPRODUCING AN OUTPUT VARIABLE
DETECTEUR DE POSITION AVEC UNITE DE SORTIE POUR REPRODUIRE UNE GRANDEUR DE SORTIE

(30) Priorität: 12.03.2004 DE 102004012072
(43) Veröffentlichungstag der Anmeldung: 06.12.2006
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); KRAPF, Reiner, 72770 Reutlingen (DE)
(86) Internationale Anmeldenummer: PCT/EP2005/050411
(87) Internationale Veröffentlichungsnummer: WO 2005/088348

(56) Entgegenhaltungen:
- WO-A-93/00039
- DE-A1- 3 743 180
- DE-A1- 19 504 841
- US-A- 4 998 058

## Beschreibung

Die Erfindung betrifft ein Ortungsgerät, insbesondere ein handgehaltenes Ortungsgerät zur Detektion von in einem Medium eingeschlossenen Objekten, nach dem Oberbegriff des Anspruchs 1.

### Stand der Technik

Ortungsgeräte werden zur Suche von beispielsweise in Wänden, Decken oder Böden verlegten Leitungen, Rohren, Metallständern, Holzbalken oder anderen Objekten verwendet. Dabei finden unter anderen induktive Geräte, d.h. Geräte, die ein Magnetfeld erzeugen, welches durch die in einem Medium eingeschlossenen Metallischen Gegenstände gestört wird, Verwendung. Neben den induktiven Geräten werden des weiteren kapazitive Geräte, Netzspannungsdetektoren sowie Hochfrequenzdetektoren genutzt.

Die meisten dieser Geräte müssen beim Einschalten bzw. in regelmäßigen Abständen kalibriert werden. Hierzu wird zumeist ein interner elektronischer Abgleich durchgeführt, der in einer Messumgebung erfolgen muss, in der sich kein zu ortendes Objekte in der Nähe des Sensors des Messgerätes befinden kann. So müssen beispielsweise Metallortungsgeräte in großem Abstand von jedem sich in der Nähe befindlichen Metall kalibriert werden. Dazu hält man beispielsweise das Gerät von der zu untersuchenden Wand weg und in den freien Luftraum hinein.

Ein speziell bei induktiven und kapazitiven Ortungsgeräten auftretendes Problem stellt die trotz Kalibrierung des Messgerätes vorhandene, enorme Dynamik der verwendeten Sensoren dar. Neben der Tiefe der zu vermessenden Objekte in dem einschließenden Medium ergibt sich der sehr große Dynamikbereich des Mess-Signals derartiger Sensoren beispielsweise auch durch die Sorte des detektierten Metalls. So erzeugt beispielsweise ein tief in einer Wand befindliches Kupferkabel ein um mehrere Größenordnungen kleineres Sensorsignal, als beispielsweise ein in 2 cm Tiefe verlegtes Eisenrohr. Eine solche Dynamik kann auf der begrenzten Anzeigefläche der Ortungsgeräte nach dem Stand der Technik nur schlecht abgebildet werden.

Aus dem Stand der Technik sind bis dato zwei Verfahren bekannt, die es ermöglichen, das Problem, das mit dem großen Dynamikbereich verbunden ist, zu lösen.

Zum einen ist es möglich, die Anzeige des Messgerätes so zu gestalten, dass der gesamte Dynamikbereich abgebildet wird. Dies ist beispielweise durch eine logarithmische Skala für die mit dem Mess-Signal korrelierte Anzeigegröße realisierbar. Nachteilig bei einer solchen Darstellung ist jedoch, dass schwache oder aber sehr starke Objekte jeweils am Anfang bzw. am Ende des dynamischen Bereichs der angezeigten Skala auftauchen und somit nur schlecht lokalisiert werden können, da die angezeigten Änderungen im Display des Messgerätes zu klein sind.

Aus dem Stand der Technik ist es darüber hinaus bekannt, das Messgerät derart auszugestalten, dass dieses automatisch die erforderliche Sensitivität ermittelt. Das Messgerät wird dabei so angesteuert, dass es anfangs auf größte Sensitivität gestellt ist und bei einem aufgefundenen, starken Mess-Signal die Sensitivität zurückschaltet, so dass die Wiedergabe der mit dem Mess-Signal korrelierten Ausgabegröße des Messgerätes immer in der Mitte des mit der Anzeige des Gerätes möglichen Darstellungsbereiches verbleibt. Dazu muss jedoch das Messgerät mehrfach über das zu vermessende Objekt verfahren werden, um die erforderlichen Sensitivitätseinstellungen vorzunehmen. Darüber hinaus geht dem Nutzer die Information über die absolute Signalstärke verloren.

Aus der WO 93/00039 ist ein Ortungsgerät mit Einhandbedienung zur Lokalisierung eines in einem menschlichen oder tierischen Körper eingedrungenen oder implantierten metallischen Fremdkörpers bekannt. Eine in einem Sensorstift angeordnete Spuleneinrichtung ist dabei verbunden mit einem Messverstärker, dessen Ausgangssignale als Maß für die für den Fremdkörper verursachte Feldbeeinflussung in einem Messkomparator auswertbar sind. Eine Optimierung der Messempfindlichkeit dieses Metallortungsgerätes wird mit einer mikroprozessorgesteuerten Automatik erreicht. Vorzugsweise wird die hoch empfindliche Sensorschaltung über einen Messverstärker mit einem A/D-Wandler verbunden, insbesondere, um die so erhaltenen Digitalsignale in Form zum Beispiel einer Leuchtbalkenanzeige, akustischen oder sonstigen grafischen Anzeige bzw. Zeigerinstrumentes, darstellen zu können. Die automatische Einstellung auf verschiedene Empfindlichkeiten ermöglicht es, dass die auf die Feldspuleneinrichtung gegebene Eingangsspannung nicht ständig in Abhängigkeit von der Größe der Metallfremdkörper angepasst werden muss.

Aus der US4998058 ist eine Methode zur elektromagnetischen Lokalisierung zweier korrespondierender Orte auf verschiedenen Seiten einer Wand bekannt. Die Signalstärke wird mittels einer pyramidenförmigen Balkenanzeige angezeigt, wobei die Sensitivität per Knopfdruck zurückgesetzt werden kann. Dies geschieht durch das Einstellen eines einzelnen Gleichstromverstärkers, welcher eine effektive Skalierung der Ausgabegrösse im Display ermöglicht.

### Vorteile der Erfindung

Das erfindungsgemäße Ortungsgerät ermöglicht es in vorteilhafter Weise, über seine Ausgabeeinheit bei der Wiedergabe einer mit dem Mess-Signal des vorhandenen Sensors korrelierten Ausgabegröße mindestens zwei Dynamikbereiche darzustellen. Die im Gerät vorhandene Ausgabeeinheit kann somit in ihrem Wiedergabebereich vollständig ausgenutzt werden, so dass es sehr einfach ist, den Ort des maximalen Mess-Signals zu detektieren.

Durch die in den abhängigen Ansprüchen aufgeführten Merkmale sind vorteilhafte Weiterbildungen des erfindungsgemäßen Ortungsgerätes möglich.

Zur besseren Darstellbarkeit des Mess-Signales, welches eine sehr hohe Dynamik aufweist, ist es vorteilhaft, das Ortungsgerät mit einem ersten sowie mindestens einem zweiten Dynamikbereich auszustatten, wobei der mindestens eine zweite Dynamikbereich eine erhöhte Sensitivität der mit dem Mess-Signal korrelierte Ausgabegröße gegenüber dem Mess-Signal aufweist. Auf diese Weise ist es möglich, unter Ausnutzung des ersten Dynamikbereiches eine Grobmessung durchzuführen und im Bereich maximaler Werte der mit dem Mess-Signal korrelierten Ausgabegröße aktiv, d.h. nutzergesteuert auf einen zweiten Dynamikbereich zu wechseln. Da bei Verwendung des zweiten Dynamikbereiches die Ausgabegröße des Ortungsgerätes eine erhöhte Sensitivität gegenüber dem Mess-Signal aufweist, wird somit die Auffindung des absoluten Maximums des Mess-Signales und somit die genaue Ortung des das Mess-Signal erzeugenden, eingeschlossenen Objektes gewährleistet.

In vorteilhafter Weise ist es möglich, die Ausgabeeinheit des Messgerätes derart zu gestalten, dass die Wiedergabe der mit dem Mess-Signal korrelierten Ausgabegröße gleichzeitig im ersten und in mindestens einem zweiten Dynamikbereich erfolgt.

In vorteilhafter Weise erfolgt daher die Wiedergabe der mit dem Mess-Signal korrelierten Ausgabegröße des Ortungsgerätes optisch, insbesondere über eine im Messgerät vorhandene Anzeige. Die optische Darstellung der mit dem Mess-Signal korrelierten Ausgabegröße ermöglicht es, das Mess-Signal gleichzeitig in einer Darstellung des ersten Dynamikbereiches und in einer Darstellung des zweiten Dynamikbereiches mit erhöhter Sensitivität vorzunehmen.

In alternativen Ausführungsformen des erfindungsgemäßen Messgerätes kann in vorteilhafter Weise vorgesehen sein, die mit dem Mess-Signal korrelierte Ausgabegröße je nach Wunsch, abwechselnd im ersten Dynamikbereich oder aber zumindest einen zweiten Dynamikbereich darzustellen. Dazu besitzt das erfindungsgemäße Ortungsgerät Schaltmittel, die es dem Nutzer ermöglichen, zwischen den mindestens zwei Dynamikbereichen hin- und herzuschalten bzw. beide Dynamikbereiche parallel zu nutzen. Auf diese Weise ist es möglich, die Sensitivität einer Messung der aktuellen Stärke des vorhandenen Mess-Signals manuell anzupassen und somit eine fein auflösende Ausgabe der mit dem Mess-Signal korrelierten Ausgabegröße zu erreichen. Der Vorteil einer manuellen Anpassung der Sensitivität liegt darin begründet, dass die im Ortungsgerät vorhandene Ausgabeeinheit, die in vorteilhafter Weise eine optische Anzeige sein kann, voll ausgenutzt werden kann. Dadurch wird es deutlich vereinfacht, die genaue Lage und ggfls. sogar die Mitte eines Objektes, beispielsweise eines Metall- oder Holzobjektes, exakt zu bestimmen, da diese dem Maximum des Mess-Signales entspricht. Mit einer derart bedienerfreundlich ausgebildeten Empfindlichkeitseinstellung hat der Nutzer ohne komplizierte oder unverständliche Bedienungselemente die volle Kontrolle über das Gerät und bekommt die Informationen, die er benötigt, in eindeutiger Weise.

In der erfindungsgemäßen Ausführungsform des Ortungsgerätes erfolgt die Wiedergabe der mit dem Mess-Signal korrelierten Ausgabegröße in diskreten, einzelnen Abstufungen, in Form von Segmentdiagrammen.

In der erfindungsgemäßen Ausführungsform des Ortungsgerätes ist der mindestens eine zweite dynamischen Bereich zur Wiedergabe der mit dem Meßsignal korrelierten Ausgabegröße einem diskreten Ausgabewert des ersten dynamischen Bereichs zugeordnet. Der mindestens eine zweite dynamischen Bereich ist derart wählbar, dass er den Dynamikbereich lediglich eines Segmentes aus der Darstellung des ersten dynamischen Bereichs der Ausgabeeinheit entspricht. Auf diese Weise lässt sich für den Nutzer des erfindungsgemäßen Ortungsgerätes eine Art "Zoom-Funktion" oder "Lupenfunktion" realisierten, die die Stärke der Ausgabegröße im ersten dynamischen Bereich der Ausgabeeinheit mittels einer erhöhten Empfindlichkeit in einen zweiten dynamischen Bereich für die Ausgabeeinheit transferiert.

Weitere Vorteile des erfindungsgemäßen Ortungsgerätes sind in der nachfolgenden Zeichnung sowie in der zugehörigen Beschreibung offenbart.

### Zeichnung

In der Zeichnung ist ein Ausführungsbeispiel für ein erfindungsgemäßes Ortungsgerät dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls in diesem Text offenbart anzusehen sind.

Es zeigt:
- Figur 1: eine typische Mess-Situation zur Ortung von einem in einem Medium eingeschlossenen Objekt in einer schematisierten Darstellung,
- Figur 2: schematisierte Darstellungen einer Anzeige eines herkömmlichen Ortungsgerätes nach dem Stand der Technik entsprechend der jeweiligen Position des Ortungsgerätes auf dem zu untersuchenden Gegenstand gemäß Figur 1,
- Figur 3: ein Ausführungsbeispiel der Darstellung der Ausgabegröße eines erfindungsgemäßen Ortungsgerätes.

### Beschreibung eines Ausfiihrungsbeispiels

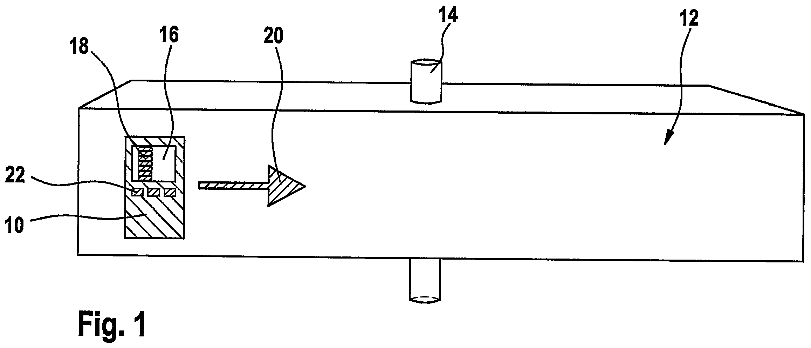

Figur 1 zeigt eine typische Mess-Situation für ein Ortungsgerät. Das Ortungsgerät 10 wird über die Oberfläche eines zu untersuchenden Mediums 12, welches beispielsweise eine Wand, ein Boden oder die Decke eines Gebäudes sein kann, verschoben, um die Lage eines in dem Medium 12 eingeschlossenen Objektes 14 zu detektieren. Bei einem solchen Objekt kann es sich beispielsweise um eine elektrische Leitung, Rohre, beispielsweise Wasserrohre, Metallständer, Holzbalken oder andere Gegenstände handeln.

Das erfindungsgemäße Ortungsgerät 10 weist insbesondere einen induktiven sowie einen kapazitiven Sensor auf, die es ermöglichen, auf Grund der durch die Sensoren erzeugten magnetischen bzw. elektrischen Felder ein in dem Medium 12 eingeschlossenes Objekt 14 zu lokalisieren und ggfls. auch zu identifizieren. Neben einer entsprechenden Ansteuerelektronik, der zugehörigen Energieversorgung sowie einer Auswerteeinheit für das detektierte Mess-Signal weist das erfindungsgemäße Ortungsgerät 10 im Ausführungsbeispiel der Figur 1 eine grafische Anzeige 16 auf, die eine Ausgabegröße wiedergibt, die mit der Stärke des Mess-Signales des Ortungsgerätes korreliert ist. Die Ausgabegröße wird mittels eines Balkendiagramms 18 dargestellt, wobei die Anzahl der beleuchteten Balken zwischen einem Minimalwert und einem Maximalwert ein Maß für das Mess-Signal darstellen. Neben der in Figur 1 gezeigten Darstellung der Ausgabegröße mittels eines Balkendiagramms 18 sind auch andere Ausgabeformen, insbesondere weitere optische Segmentdiagramme, möglich. So könnte beispielsweise auch ein rundes, insbesondere ein kreisrundes Anzeigenfeld genutzt werden, wobei der beleuchtete Winkelbereich dieser Anzeige dann mit der Signalstärke des Messsignals korreliert wäre. Ein Vollausschlag des Messgerätes würde in dieser Darstellungsweise einer vollständigen Beleuchtung der Anzeige von 360° entsprechen. Kleinere Messsignale würden durch einen entsprechend kleineren beleuchteten Winkelbereich dargestellt. Diese alternative Anzeige könnte aus diskreten Winkelelementen, von beispielsweise jeweils 5 oder 10 Winkelgraden aufgebaut sein oder aber auch ein kontinuierlich auszuleuchtendes Feld sein.

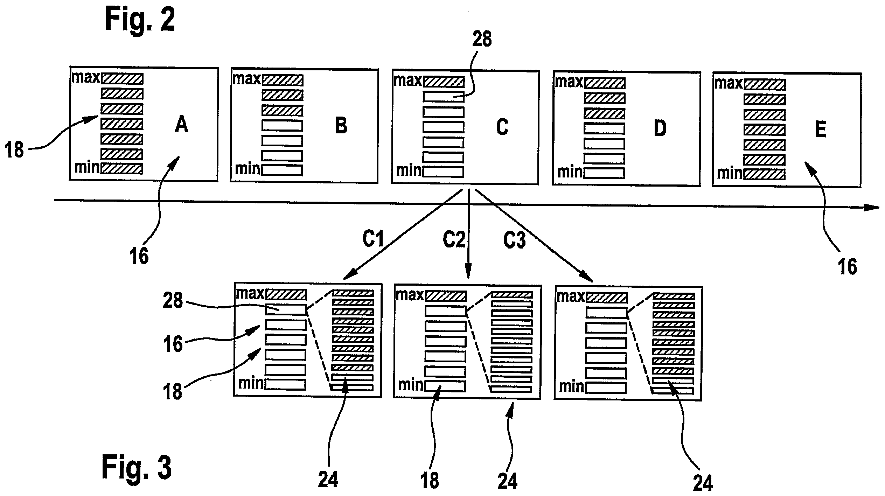

Figur 2 zeigt in einer Abfolge von schematischen Darstellungen A bis E die Anzeige 16 eines Messgerätes nach dem Stand der Technik beim Verfahren eines solchen Messgeräts in Richtung des Pfeils 20 in Figur 1. Die Darstellungen der Anzeigen A bis E sind dabei in etwa der entsprechenden Position des Messgerätes 10 in Figur 1 zugeordnet. Ist das Messgerät 10 sehr weit von einem zu detektierenden Objekt 14 entfernt, so ist das mit dem entsprechenden Sensor erzielte Mess-Signal so gering oder gar nicht vorhanden, dass die mit dem Mess-Signal korrelierte Ausgabegröße auf Null gesetzt ist (Anzeigedarstellung A in Figur 2). Nähert sich das Ortungsgerät 10 nun einem im Medium 12 eingeschlossenen Objekt 14, so steigt das Mess-Signal und somit die mit dem Mess-Signal korrelierte Ausgabegröße an. So ist beispielsweise in der Anzeigendarstellung B ein mittlerer Wert dargestellt, der in der diskreten Balkendarstellung,18 beispielsweise durch drei beleuchtete Balken, wiedergegeben wird. Überfährt man nun mit dem Ortungsgerät 10 das Objekt 14, so kommt es zu einem deutlichen Anstieg des Mess-Signals und dadurch zu einem Maximalausschlag auf der Anzeige 16 des Ortungsgerätes (Anzeigendarstellung C).
Insbesondere kann es bei Geräten des Standes der Technik nun in dieser Mess-Situation in der Nähe des eingeschlossenen Gegenstandes 14 dazu kommen, dass über einen größeren Verfahrweg des Ortungsgerätes 10 im Bereich des zu detektierenden Objektes 14 das Mess-Signal derart stark ist, dass über den gesamten Bereich lediglich der Maximalausschlag 28 der Ausgabegröße gemäß der Darstellung der Anzeige C des Messgerätes wiedergegeben wird. Da das Gerät in diesem Fall über eine große Verschiebestrecke somit immer beispielsweise den Vollausschlag anzeigt, ist eine exakte Ortung der Lage des eingeschlossenen Objektes 14 nicht möglich.

Wird das Ortungsgerät nun über das zu detektierende Objekt 14 hinaus in Richtung des Pfeils 20 in Figur 1 weiter verschoben, so nimmt das Mess-Signal und somit die Ausgabegröße allmählich wieder ab, wie dies schematisch in den zugeordneten Anzeigedarstellungen D und E der Figur 2 dargestellt ist.

Mit dem erfindungsgemäßen Ortungsgerät 10 ist es vorteilhaft möglich, insbesondere im Bereich von großen Signalstärken, die sich in der Nähe eines zu ortenden Objektes 14 ergeben, über die Ausgabeeinheit 16 des Ortungsgerätes 10 mindestens einen weiteren Dynamikbereich mit einer gegenüber dem ersten Dynamikbereich (entsprechend den Darstellungen der Anzeigen A bis E) erhöhten Sensitivität darzustellen.

Dazu sind am erfindungsgemäßen Ortungsgerät Schaltmittel 22 vorgesehen, die in Art einer "Zoom"-Funktion oder -Taste das Signal des ersten Balkendiagramms 18, welches einer Darstellung des Mess-Signales in einem ersten dynamischen Bereich entspricht, "einfriert" und die Empfindlichkeit des Gerätes 10 auf die gerade vorhandene Signalstärke einregelt. Gleichzeitig wird, wie im Ausführungsbeispiel der Figur 3 eine zweite, feinere Skala 24 ebenfalls in Form eines Balkendiagramms eingeblendet, welche einen dynamischen Bereich besitzt, der eine deutlich höhere Sensitivität gegenüber Änderungen des Mess-Signals aufweist. Insbesondere ist es vorteilhaft, den zweiten dynamischen Bereich, der mittels der Feinskala 24 dargestellt wird, so einzurichten, dass er gerade nur den Dynamikbereich des erreichten, maximalen diskreten Anzeigewertes 28 des ersten dynamischen Bereichs, wie er mittels des Balkendiagramms 18 dargestellt ist, entspricht.

Figur 3 zeigt in einer schematischen Darstellung eine optische Anzeige 16 des erfindungsgemäßen Ortungsgerätes im Nahbereich eines zu detektierenden Objektes 14. Während eine Anzeige bei Messgeräten des Standes der Technik (vgl. Figur 2) über den gesamten Bereich einen Maximalausschlag (siehe Anzeigendarstellung C bzw. "Grobskala" 18 in Figur 3) aufweisen würde, ermöglicht das erfindungsgemäße Messgerät durch das Hinzuschalten und die Anzeige eines zweiten dynamischen Bereichs das exakte Auffinden des Maximums für das Mess-Signal.

Für alle drei, in Figur 3 durch die jeweilige Anzeige (C1, C2, C3) des Mess-Signals wiedergegebenen Positionen des Ortungsgerätes zeigt das erste Balkendiagramm 18 entsprechend dem ersten dynamischen Bereich den Maximalwert 28 an. Anhand der Feinskala 24, die bezüglich der Empfindlichkeit der Ausgabegröße von der Messgröße auf die aktuell vorhandene Signalstärke der Messgröße angepasst ist und somit wesentlich empfindlicher auf Signaländerungen zu reagieren vermag, ist es dem Nutzer des erfindungsgemäßen Ortungsgeräts möglich, die exakte Lage des Signalmaximums (Anzeige C2 in Figur 3) für das Mess-Signal zu detektieren. Mit Hilfe des zweiten dynamischen Bereichs bzw. seiner Darstellung über die Feinskala 24 wird es dem Nutzer somit ermöglicht, den genauen Ort und eventuell sogar auch die Mitte des Objektes 14 exakt zu lokalisieren.

Die Betätigung des Schaltmittels 22 ("Zoom"-Taste) kann auch derart ausgelegt sein, dass die Feinskala 24 lediglich während der Betätigung der Taste 22 in der Anzeige 16 des Messgerätes 10 eingeblendet wird. Eine solche Ausgestaltung kann man mit einer "Lupenfunktion" vergleichen, da sie die Abbildung der an der aktuellen Messfläche vorhandenen Signale wesentlich genauer ermöglicht, als dies eine Grobskala, die den ganzen möglichen Messbereich abdecken muss, bewerkstelligen kann.

In alternativen Ausführungsformen der Anzeige 16 des erfindungsgemäßen Ortungsgerätes 10 kann vorgesehen sein, dass der Nutzer durch entsprechende Schaltmittel zwischen den beiden Darstellungsarten des ersten dynamischen Bereichs und des zweiten dynamischen Bereichs wechseln kann, so dass jeweils lediglich ein Balkendiagramm in der Anzeige 16 des Messgerätes vorhanden ist.

Selbstverständlich muss die beschriebene Art der Empfindlichkeitseinstellung durch Verwendung eines zweiten dynamischen Bereichs nicht mit Hilfe eines digitalen Displays umgesetzt werden. Entsprechende Ausführungsformen sind auch in Analoginstrumenten zu realisieren.

Das erfindungsgemäße Ortungsgerät ist beschränkt auf eine optische Ausgabeeinheit. Allerdings lässt sich das Prinzip der wählbaren dynamischen Bereiche auch mit einer akustischen Ausgabe realisieren.

Das erfindungsgemäße Ortungsgerät ist nicht auf die in den Figuren dargestellte Ausführungsform beschränkt.

Insbesondere ist das erfindungsgemäße Ortungsgerät nicht beschränkt auf die Verwendung eines induktiven oder kapazitiven Sensors. In vorteilhafter Weise lässt sich ein Ortungsgerät realisieren, das zumindest einen induktiven und zumindest einen kapazitiven Sensor und optional weitere Detektoren, wie beispielsweise einen Netzspannungsdetektor, einen Hochfrequenzdetektor oder einen Radarsensor aufweist.

Das erfindungsgemäße Ortungsgerät ermöglicht es somit, seinem Nutzer, bei einem aufgefundenen Objekt die Sensitivität des Gerätes manuell der Signalstärke anzupassen, um somit eine fein aufgelöste Wiedergabe des Mess-Signals zu erhalten.

## Patentansprüche

1. Ortungsgerät, insbesondere ein handgehaltenes Ortungsgerät zur Detektion von in einem Medium (12) eingeschlossenen Objekten (14), mit einer Ausgabeeinheit (16) zur Wiedergabe mindestens einer mit einem Mess-Signal mindestens eines Sensors korrelierten Ausgabegröße, wobei die Wiedergabe der mit dem Mess-Signal korrelierten Ausgabegröße in diskreten Ausgabewerten (18,24) erfolgt und die Ausgabeeinheit (16) über einen ersten Dynamikbereich zur Wiedergabe der mit dem Mess-Signal korrelierten Ausgabegröße verfügt, wobei über die Ausgabeeinheit (16) mindestens ein zweiter Dynamikbereich mit gegenüber dem ersten Dynamikbereich veränderter Sensitivität optisch wiedergebbar ist, **dadurch gekennzeichnet, dass** der mindestens eine zweite Dynamikbereich zur Wiedergabe einer mit dem Mess-Signal korrelierten Ausgabegröße mindestens einem diskreten Ausgabewert (28) des ersten Dynamikbereichs zugeordnet ist, wobei die Wiedergabe der mit dem Mess-Signal korrelierten Ausgabegröße in Form mindestens eines Segmentdiagramms (18,24) erfolgt, und der mindestens eine zweite Dynamikbereich derart wählbar ist, dass er dem Dynamikbereich eines Segmentes (28) aus dem ersten Dynamikbereich der Ausgabeeinheit (16) entspricht.

2. Ortungsgerät nach Anspruch 1, **dadurch gekennzeichnet, dass** der mindestens eine zweite Dynamikbereich eine gegenüber dem ersten Dynamikbereich erhöhte Sensitivität der mit dem Mess-Signal korrelierten Ausgabegröße gegenüber dem Mess-Signal aufweist.

3. Ortungsgerät nach Anspruch 1 oder 2, **dadurch gekennzeichnet, dass** die Wiedergabe der mit dem Mess-Signal korrelierten Ausgabegröße gleichzeitig im ersten und in dem mindestens einen zweiten Dynamikbereich der Ausgabeeinheit (16) erfolgt.

4. Ortungsgerät nach einem der vorhergehenden Ansprüche 1 bis 3, **dadurch gekennzeichnet, dass** die Wiedergabe der mit dem Mess-Signal korrelierten Ausgabegröße wahlweise im ersten oder in dem mindestens einen zweiten Dynamikbereich der Ausgabeeinheit (16) erfolgt.

5. Ortungsgerät nach Anspruch 4, **dadurch gekennzeichnet, dass** der Wechsel zwischen dem einen ersten Dynamikbereich und dem mindestens einen zweiten Dynamikbereich nutzergesteuert erfolgt.

6. Ortungsgerät nach Anspruch 5, **dadurch gekennzeichnet, dass** das Ortungsgerät (10) über Schaltmittel (22) verfügt, die es dem Nutzer ermöglichen, die Sensitivität einer Messung der aktuellen Stärke des Mess-Signals anzupassen.

## Claims

1. Locating device, in particular a hand-held locating device, for detecting objects (14) enclosed in a medium (12), having an output unit (16) for reproducing at least one output variable correlated with a measurement signal of at least one sensor, wherein the reproduction of the output variable correlated with the measurement signal is effected in discrete output values (18, 24) and the output unit (16) has a first dynamic range for reproducing the output variable correlated with the measurement signal, wherein at least one second dynamic range having altered sensitivity in comparison with the first dynamic range is optically reproducible by means of the output unit (16), **characterized in that** the at least one second dynamic range is associated with at least one discrete output value (28) of the first dynamic range for the purpose of reproducing an output variable correlated with the measurement signal, wherein the reproduction of the output variable correlated with the measurement signal is effected in the form of at least one segment chart (18, 24), and the at least one second dynamic range is selectable such that it corresponds to the dynamic range of a segment (28) from the first dynamic range of the output unit (16).

2. Locating device according to Claim 1, **characterized in that** the at least one second dynamic range has an increased sensitivity, in comparison with the first dynamic range, for the output variable correlated with the measurement signal toward the measurement signal.

3. Locating device according to Claim 1 or 2, **characterized in that** the reproduction of the output variable correlated with the measurement signal is effected in the first and in the at least one second dynamic range of the output unit (16) at the same time.

4. Locating device according to one of the preceding Claims 1 to 3, **characterized in that** the reproduction of the output variable correlated with the measurement signal is effected either in the first or in the at least one second dynamic range of the output unit (16).

5. Locating device according to Claim 4, **characterized in that** the change between one first dynamic range and the at least one second dynamic range is made under user control.

6. Locating device according to Claim 5, **characterized in that** the locating device (10) has switching means (22) allowing the user to adjust the sensitivity of a measurement of the present strength of the measurement signal.

## Revendications

1. Appareil de localisation, en particulier appareil de localisation portatif, pour détecter des objets (14) enfermés dans un milieu (12), comportant une unité de sortie (16) pour la reproduction d'au moins une grandeur de sortie en corrélation avec un signal de mesure d'au moins un capteur, dans lequel la reproduction de la grandeur de sortie en corrélation avec le signal de mesure est effectuée sous forme de valeurs de sortie discrètes (18, 24) et l'unité de sortie (16) présente une première gamme dynamique pour la reproduction de la grandeur de sortie en corrélation avec le signal de mesure, dans lequel au moins une seconde gamme dynamique présentant une sensibilité modifiée par rapport à la première gamme dynamique peut être reproduite optiquement par l'unité de sortie (16),
**caractérisé en ce que** ladite au moins une seconde gamme dynamique est associée à au moins une valeur de sortie discrète (28) de la première gamme dynamique pour la reproduction d'une grandeur de sortie en corrélation avec le signal de mesure, dans lequel la reproduction de la grandeur de sortie en corrélation avec le signal de mesure est effectuée sous la forme d'au moins un diagramme de segments (18, 24), et ladite au moins une seconde gamme dynamique peut être sélectionnée de manière à correspondre à la gamme dynamique d'un segment (28) issu de la première gamme dynamique de l'unité de sortie (16) .

2. Appareil de localisation selon la revendication 1, **caractérisé en ce que** ladite au moins une seconde gamme dynamique présente une sensibilité accrue par rapport à la première gamme dynamique de la grandeur de sortie en corrélation avec le signal de mesure par rapport au signal de mesure.

3. Appareil de localisation selon la revendication 1 ou 2, **caractérisé en ce que** la reproduction de la grandeur de sortie en corrélation avec le signal de mesure est effectuée simultanément dans la première et dans ladite au moins une seconde gamme dynamique de l'unité de sortie (16).

4. Appareil de localisation selon l'une des revendications 1 à 3 précédentes, **caractérisé en ce que** la reproduction de la grandeur de sortie en corrélation avec le signal de mesure est effectuée de manière sélective dans la première ou dans ladite au moins une seconde gamme dynamique de l'unité de sortie (16).

5. Appareil de localisation selon la revendication 4, **caractérisé en ce que** le basculement entre la première gamme dynamique et ladite au moins une seconde gamme dynamique est effectué de manière commandée par l'utilisateur.

6. Appareil de localisation selon la revendication 5, **caractérisé en ce que** l'appareil de localisation (10) comporte des moyens de commutation (22) permettant à l'utilisateur d'adapter la sensibilité d'une mesure à l'intensité actuelle du signal de mesure.
